# EUROPEAN PATENT APPLICATION

(11) **EP 4 782 162 A2**
(43) Date of publication of application: **29.07.2026**
(21) Application number: 26179736.9
(22) Date of filing: 19.05.2026
(51) Int. Cl.: B25J 17/00, B62D 57/032

(54) **HEAD STRUCTURE AND HUMANOID ROBOT**

(30) Priority: 07.11.2025 CN 202522363771 U
(71) Applicant: Shanghai TARS Robotics Co., Ltd., Shanghai 200233 (CN)
(72) Inventor: ZHU, Xing, Shanghai 200233 (CN); WANG, Tianyi, Shanghai 200233 (CN)
(74) Representative: JD&P Patent Attorneys Joanna Dargiewicz & Partners

(57) **Abstract**

A head structure for a humanoid robot includes a head frame, a motor bracket, and a pitch motor. The motor bracket includes a first fixing side plate and a second fixing side plate facing each other, and the first fixing side plate and the second fixing side plate are each configured to be connected to a neck structure. The pitch motor is fixed between the first fixing side plate and the second fixing side plate. The head frame is rotatably connected to the first fixing side plate. An output shaft of the pitch motor penetrates through the second fixing side plate and is connected to the head frame. An axis of the pitch motor is arranged to pass through a center of gravity of the head structure, thereby improving the stability of the head structure.

## Description

### TECHNICAL FIELD

The present disclosure relates to the technical field of robots, and in particular to a head structure and a humanoid robot.

### BACKGROUND

Humanoid robots need to perform various movements, such as moving forward, moving backward, nodding, and looking up, to achieve human-like interaction with the environment. The flexibility and stability of head movements are key to enhancing the robot expressiveness. A head structure of a humanoid robot is typically driven by a pitch motor to achieve pitching motions such as nodding and looking up.

In the prior art, various solutions for robot head-neck structures have been proposed. For instance, the Chinese patent CN222755459U discloses a head-neck structure of a humanoid robot. In this head-neck structure, a pitch motor is arranged directly above a neck to drive a pitching motion of a head.

In the prior art, a pitch motor is often offset from a center of gravity of a head structure. As a result, when the pitch motor starts or stops, a significant inertial torque is generated. The significant inertial torque can easily cause noticeable shaking of the head structure at the beginning and end of a pitching motion, leading to unstable movements.

### SUMMARY OF PRESENT INVENTION

An objective of the present disclosure is to provide a head structure and a humanoid robot in view of the shortcomings in the prior art, so as to address the unstable movements generated because an axis of a pitch motor does not pass through the center of gravity of a head structure.

To achieve the above objective, the present disclosure provides the following technical solutions:

A head structure is provided, including:
a head frame;
a motor bracket, where the motor bracket includes a first fixing side plate and a second fixing side plate facing each other, and the first fixing side plate and the second fixing side plate are each configured to be connected to a neck structure; and
a pitch motor, where the pitch motor is fixed between the first fixing side plate and the second fixing side plate,
where the head frame is rotatably connected to the first fixing side plate, an output shaft of the pitch motor penetrates through the second fixing side plate and is connected to the head frame, and an axis of the pitch motor is arranged to pass through a center of gravity of the head structure.

As a preferred embodiment, the pitch motor includes a non-output end face and an output end face facing each other, the output end face is provided with the output shaft, and the output end face is connected to the second fixing side plate.

As a preferred embodiment, the head frame includes:
a first frame side plate, where the first frame side plate is rotatably connected to the first fixing side plate; and
a second frame side plate, where the second frame side plate is connected to the output shaft of the pitch motor.

As a preferred embodiment, a circular boss is provided on the first fixing side plate, a circular hole is formed in the first frame side plate, and the circular boss is received within the circular hole such that the first frame side plate is rotatably connected to the first fixing side plate.

As a preferred embodiment, the motor bracket further includes:
a fixing enclosure plate, where the fixing enclosure plate is connected between the first fixing side plate and the second fixing side plate, and the fixing enclosure plate is located outside the pitch motor;
a bracket inclined plate, wherein the bracket inclined plate is connected between the fixing enclosure plate and a bracket bottom plate; and
the bracket bottom plate, where the bracket bottom plate is connected to the neck structure.

As a preferred embodiment, the head frame further includes:
a frame upper plate, where the frame upper plate is connected between the first frame side plate and the second frame side plate; and
a frame lower plate, where the frame lower plate is connected between the first frame side plate and the second frame side plate.

As a preferred embodiment, the head structure further includes:
a head housing, where the head housing encloses an exterior of the head frame and is connected to the head frame.

A humanoid robot is provided, including the head structure described above, a neck structure, and a torso structure, where an end of the neck structure is connected to a housing of the pitch motor and another end of the neck structure is connected to the torso structure.

As a preferred embodiment, the humanoid robot further includes:
a rotary motor, where a housing of the rotary motor is connected to the torso structure, and an output shaft of the rotary motor is connected to the neck structure.

Compared with the prior art, the technical solutions of the present disclosure offer the following advantages:
By arranging the axis of the pitch motor to pass through the center of gravity of the head structure, the present disclosure eliminates an inertial torque caused by the deviation of the center of gravity from the axis, thereby improving the smoothness of the head structure during start and stop phases of a pitching motion.

In addition, by arranging a first connection point and a second connection point at two sides of the axis of the pitch motor, respectively, the present disclosure provides stable two-point support for the head frame.

### BRIEF DESCRIPTION OF THE DRAWINGS

FIG. 1 is a cross-sectional view showing a head structure according to one embodiment of the present disclosure;
FIG. 2 is a schematic diagram showing an assembly of the head frame and the neck structure according to one embodiment of the present disclosure;
FIG. 3 is a schematic diagram showing an assembly of the motor bracket and the neck structure according to one embodiment of the present disclosure;
FIG. 4 is a schematic diagram showing an assembly of the head structure and the neck structure according to one embodiment of the present disclosure; and
FIG. 5 is a schematic structural diagram showing the humanoid robot according to one embodiment of the present disclosure.

Reference numerals: 100-head structure, 110-head frame, 111-first frame side plate, 1111-frame horizontal plate, 1112-frame vertical plate, 111a-circular hole, 112-second frame side plate, 120-head housing, 121-opening, 113-frame upper plate, 114-frame lower plate, 130-pitch motor, 131-non-output end face, 132-output end face, 133-output shaft of the pitch motor, 134-housing of the pitch motor, 140-motor bracket, 141-first fixing side plate, 141a-circular boss, 142-second fixing side plate, 143-fixing enclosure plate, 144-bracket inclined plate, 145-bracket bottom plate, 200-neck structure, 210-neck side plate, 220-neck upper plate, 230-neck lower plate, 300-torso structure, 400-rotary motor, 410-output shaft of the rotary motor, and 420-housing of the rotary motor.

### DETAILED DESCRIPTION OF THE EMBODIMENTS

The following description is provided to disclose the present disclosure such that those skilled in the art can implement the present disclosure. The following preferred embodiments are merely provided as examples, and those skilled in the art may conceive of other obvious variations. The basic principles of the present disclosure defined in the following description may be applied to other embodiments, variations, improvements, equivalents, and other technical solutions that do not depart from the spirit and scope of the present disclosure.

### Embodiment 1

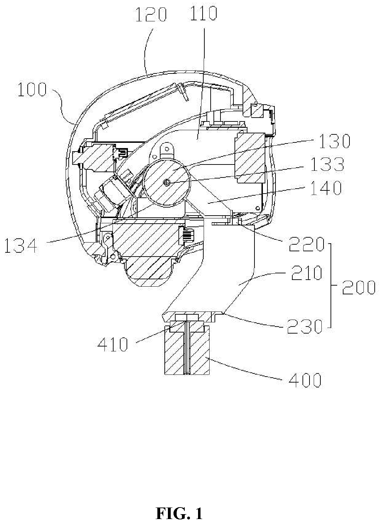

As shown in FIG. 1 to FIG. 3, this embodiment of the present disclosure provides a head structure 100, including: a head frame 110, a motor bracket 140, and a pitch motor 130.

The motor bracket 140 includes a first fixing side plate 141 and a second fixing side plate 142 facing each other. The first fixing side plate 141 and the second fixing side plate 142 are each configured to be connected to a neck structure 200.

The pitch motor 130 is fixed between the first fixing side plate 141 and the second fixing side plate 142.

The head frame 110 is rotatably connected to the first fixing side plate 141. An output shaft 133 of the pitch motor 130 penetrates through the second fixing side plate 142 and is connected to the head frame 110. An axis of the pitch motor 130 is arranged to pass through a center of gravity of the head structure 100.

In the prior art, an axis of a pitch motor is often offset from a center of gravity of a head structure. Under this configuration, when the pitch motor drives the head structure to rotate about the axis of the pitch motor, the center of gravity of the head structure undergoes a circular movement around the axis of the pitch motor. Such a circular movement leads to centrifugal acceleration that induces a periodically varying inertial force. This inertial force creates an inertial torque relative to the axis of the pitch motor, which is the cause of instability in a pitching motion of the head structure during start and stop phases.

In this embodiment, arranging the axis of the pitch motor 130 to pass through the center of gravity of the head structure 100 structurally achieves the coincidence between the center of gravity and the axis of the pitch motor 130. With this structural optimization, when the head structure 100 rotates about the axis of the pitch motor, the center of gravity of the head structure lies on this axis and does not generate an additional inertial torque due to a centrifugal movement. Consequently, a torque output by the pitch motor 130 is entirely utilized to overcome the moment of inertia and generate angular acceleration, which can enhance the smoothness of a pitching motion.

Further, a connection position between the first fixing side plate 141 and the head frame 110 is defined as a first connection point, and a connection position between the output shaft 133 of the pitch motor 130 and the head frame 110 is defined as a second connection point. The first connection point and the second connection point are both located on the axis of the pitch motor 130 and are arranged at two sides of the pitch motor 130, respectively. When the pitch motor 130 operates, the head frame 110 is jointly supported by the first connection point and the second connection point, which prevents shaking caused by unilateral support and thus improves the smoothness of a rotation of the head frame 110 about the axis of the pitch motor 130.

As shown in FIG. 1, the center of gravity of the head structure 100 is approximately located at a geometric center of the head structure 100. Specifically, the center of gravity is approximately located at a midpoint of the head structure 100 from top to bottom, from the front side to the rear side, and from the left side to the right side. The axis of the pitch motor 130 is set as a horizontal axis that extends from left to right and passes through the center of gravity of the head structure 100.

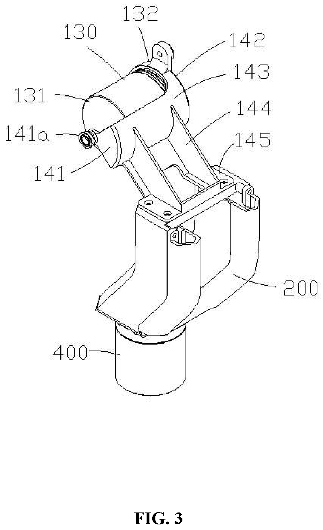

As shown in FIG. 1 and FIG. 3, the pitch motor 130 is fixed inside the head structure 100 through the motor bracket 140. Two ends of the motor bracket 140 are connected to a housing 134 of the pitch motor 130 and the neck structure 200, respectively. The motor bracket 140 is configured in an inclined posture such that the axis of the pitch motor 130 passes through the center of gravity of the head structure 100.

As shown in FIG. 3, the pitch motor 130 includes a non-output end face 131 and an output end face 132 facing each other.

The output end face 132 is provided with an output shaft. The output end face 132 is oriented toward the second fixing side plate 142. The output end face 132 is fixedly connected through bolts to the second fixing side plate 142. In this way, the pitch motor 130 is securely arranged on the motor bracket 140. The output shaft passes through a through hole in the second fixing side plate 142 and is connected to the head frame 110.

The non-output end face 131 is oriented toward the first fixing side plate 141. In an embodiment, a clearance may be maintained between the non-output end face 131 and the first fixing side plate 141. This clearance provides operational space for the routing of motor cables.

The first fixing side plate 141 is configured as a triangular, trapezoidal, or notched frame. This design allows a notch of the first fixing side plate 141 to serve as a cable routing passage. Consequently, cables of the pitch motor 130 can be easily led out from the non-output end face 131 and then connected downward to a controller or other components within the neck structure 200.

As shown in FIG. 3, the motor bracket 140 further includes a fixing enclosure plate 143, a bracket inclined plate 144, and a bracket bottom plate 145.

The fixing enclosure plate 143 is connected between the first fixing side plate 141 and the second fixing side plate 142. The fixing enclosure plate 143 is located outside the pitch motor 130.

The bracket inclined plate 144 is connected between the fixing enclosure plate 143 and the bracket bottom plate 145.

The bracket bottom plate 145 is connected to the neck structure 200.

The fixing enclosure plate 143 surrounds an exterior of the pitch motor 130, and an assembly and heat dissipation clearance is maintained between the fixing enclosure plate and the pitch motor. Specifically, the fixing enclosure plate 143 has a curvature of less than 180°. This design, together with the notch of the second fixing side plate 142, forms an open cable routing passage, facilitating the arrangement of the motor cables.

The inclined design of the bracket inclined plate 144 is intended to arrange the axis of the pitch motor 130 fixed on the bracket inclined plate to pass through the center of gravity of the head structure 100. Two bracket inclined plates 144 are provided to enhance the stability and reliability of support.

A mounting hole is formed in the bracket bottom plate 145. The bracket bottom plate is connected through bolts to a neck upper plate 220 of the neck structure 200 below.

The first fixing side plate 141, the second fixing side plate 142, the fixing enclosure plate 143, the bracket inclined plate 144, and the bracket bottom plate 145 are integrally formed (for example, by casting and injection molding).

As shown in FIG. 1 to FIG. 3, the head frame 110 includes a first frame side plate 111 and a second frame side plate 112.

The first frame side plate 111 is rotatably connected to the first fixing side plate 141.

The second frame side plate 112 is connected to the output shaft of the pitch motor 130.

The first frame side plate 111 is located at an outer side of the first fixing side plate 141, and is rotatably connected to the first fixing side plate. To achieve a rotational connection, a circular boss 141a is provided on the first fixing side plate 141, a circular hole 111a is formed in the first frame side plate 111, and the circular boss 141a is received within the circular hole 111a such that the first frame side plate 111 is rotatably connected to the first fixing side plate 141.

The second frame side plate 112 is located at an outer side of the second fixing side plate 142. The output shaft 133 of the pitch motor 130 passes through the second fixing side plate 142 and is connected to the second frame side plate 112.

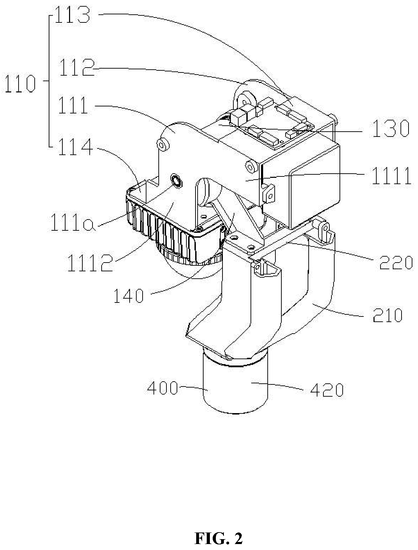

As shown in FIG. 2, the head frame 110 further includes a frame upper plate 113 and a frame lower plate 114.

The frame upper plate 113 is connected between the first frame side plate 111 and the second frame side plate 112.

The frame lower plate 114 is connected between the first frame side plate 111 and the second frame side plate 112.

The first frame side plate 111 and the second frame side plate 112 are arranged opposite and parallel to each other. The frame upper plate 113 and the frame lower plate 114 are connected between the first frame side plate and the second frame side plate to join the first frame side plate 111 and the second frame side plate 112 into a rigid integral frame, which can effectively guarantee the structural rigidity and stability of the head frame 110.

The frame upper plate 113 and the frame lower plate 114 can be configured to fix a component such as a circuit board.

As shown in FIG. 1 and FIG. 2, both the first frame side plate 111 and the second frame side plate 112 of the head frame 110 are L-shaped. For example, the first frame side plate 111 includes a frame horizontal plate 1111 and a frame vertical plate 1112 that are connected perpendicularly to each other. A lower end of the frame vertical plate 1112 is connected to the frame lower plate 114. An upper end of the frame vertical plate 1112 is connected to a front end of the frame horizontal plate 1111. An upper side of the frame horizontal plate 1111 is connected to the frame upper plate 113. The frame upper plate 113 is arranged adjacent to a rear end of the frame horizontal plate 1111. The second frame side plate 112 has the same structure as the first frame side plate.

When the head structure 100 is oriented with a face facing directly forward, the frame upper plate 113 is located above and behind the pitch motor 130 and directly above the bracket bottom plate 145 of the motor bracket 140. A first clearance is reserved between the frame upper plate 113 and the bracket inclined plate 144. The first clearance constitutes the angular space required for a looking-up movement of the head structure 100.

The frame lower plate 114 is located below the pitch motor 130 and at a front side of the neck structure 200. In this case, a second clearance between the frame lower plate 114 and the bracket inclined plate 144 is relatively small.

When the pitch motor 130 drives the head structure 100 to perform the looking-up movement, the head frame 110 rotates backward about the axis. During this process, the first clearance between the frame upper plate 113 and the bracket inclined plate 144 gradually decreases, and the second clearance between the frame lower plate 114 and the bracket inclined plate 144 gradually increases. The increased second clearance provides ample non-interference space for the head structure 100 to return from a looking-up posture to an initial posture.

Therefore, when the pitch motor 130 drives the head frame 110 to perform the looking-up movement around the axis, the head frame 110 does not interfere with the motor bracket 140, ensuring a reliable movement.

As shown in FIG. 1 to FIG. 4, the head structure 100 further includes a head housing 120.

The head housing 120 encloses an exterior of the head frame 110 and is connected to the head frame 110 through snaps or screws, for example.

Since the head housing 120 is connected to the head frame 110, the head housing 120 rotates along with the head frame 110.

### Embodiment 2

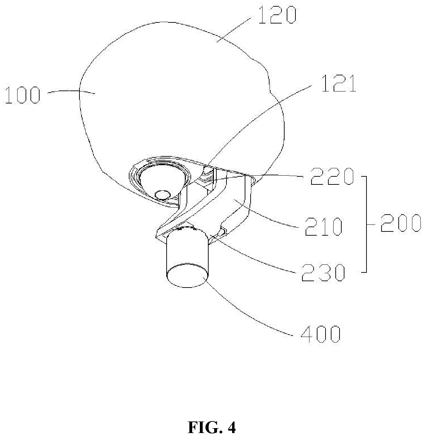

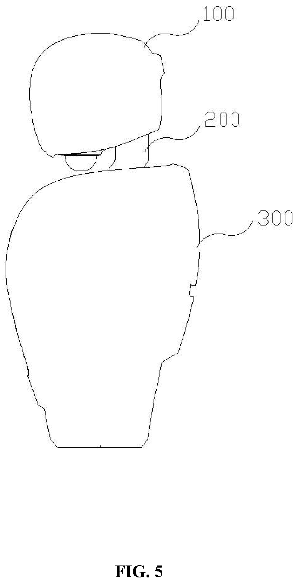

As shown in FIG. 4 and FIG. 5, this embodiment provides a humanoid robot, including the head structure 100 in Embodiment 1, a neck structure 200, and a torso structure 300. An end of the neck structure 200 is connected to the housing 134 of the pitch motor 130 and another end of the neck structure 200 is connected to the torso structure 300.

A lower portion of the head housing 120 of the head structure 100 is provided with an opening 121. An upper end of the neck structure 200 passes through the opening 121 and is connected to the motor bracket 140. Moreover, a size of the opening 121 is sufficient to accommodate a pitching motion of the head structure 100 and provide ample space for a relative movement between the head housing 120 and the neck structure 200. Consequently, within a pitching motion range, no interference occurs between the head housing 120 and the neck structure 200.

As shown in FIG. 2 and FIG. 4, the neck structure 200 includes a neck side plate 210, a neck upper plate 220, and a neck lower plate 230. Two neck side plates 210 are provided and connected between the neck upper plate 220 and the neck lower plate 230.

The neck upper plate 220 is connected to the bracket bottom plate 145 of the motor bracket 140, and the neck lower plate 230 is connected to the torso structure 300.

As shown in FIG. 4, the humanoid robot further includes a rotary motor 400.

A housing 420 of the rotary motor 400 is connected to the torso structure 300. An output shaft 410 of the rotary motor 400 is connected to the neck lower plate 230 of the neck structure 200.

An axis of the rotary motor 400 is arranged vertically and is perpendicular to the axis of the pitch motor 130. The rotary motor 400 drives the neck structure 200 and the head structure 100 to perform a horizontal rotation movement. The rotary motor 400 may be embedded within the torso structure 300.

The embodiments described above are merely intended to illustrate the technical concept and features of the present disclosure and to enable those skilled in the art to understand and implement the content of the present disclosure. The scope of the present disclosure shall not be limited solely by these embodiments. That is, all equivalent modifications or variations made based on the spirit disclosed by the present disclosure shall still fall within the scope of the present disclosure.

## Claims

1. A head structure (100), comprising:
a head frame (110);
a motor bracket (140), wherein the motor bracket (140) comprises a first fixing side plate (141) and a second fixing side plate (142) facing each other, and the first fixing side plate (141) and the second fixing side plate (142) are each configured to be connected to a neck structure (200); and
a pitch motor (130), wherein the pitch motor (130) is fixed between the first fixing side plate (141) and the second fixing side plate (142),
wherein the head frame (110) is rotatably connected to the first fixing side plate (141), an output shaft (133) of the pitch motor (130) penetrates through the second fixing side plate (142) and is connected to the head frame (110), and an axis of the pitch motor (130) is arranged to pass through a center of gravity of the head structure (100).

2. The head structure (100) according to claim 1, wherein the pitch motor (130) comprises a non-output end face (131) and an output end face (132) facing each other, the output end face (132) is provided with the output shaft, and the output end face (132) is connected to the second fixing side plate (142).

3. The head structure (100) according to claim 1, wherein the head frame (110) comprises:
a first frame side plate (111), wherein the first frame side plate (111) is rotatably connected to the first fixing side plate (141); and
a second frame side plate (112), wherein the second frame side plate (112) is connected to the output shaft of the pitch motor (130).

4. The head structure (100) according to claim 3, wherein a circular boss (141a) is provided on the first fixing side plate (141), a circular hole (111a) is formed in the first frame side plate (111), and the circular boss (141a) is received within the circular hole (111a) such that the first frame side plate (111) is rotatably connected to the first fixing side plate (141).

5. The head structure (100) according to claim 1, wherein the motor bracket (140) further comprises:
a fixing enclosure plate (143), wherein the fixing enclosure plate (143) is connected between the first fixing side plate (141) and the second fixing side plate (142), and the fixing enclosure plate (143) is located outside the pitch motor (130);
a bracket inclined plate (144), wherein the bracket inclined plate (144) is connected between the fixing enclosure plate (143) and a bracket bottom plate (145); and
the bracket bottom plate (145), wherein the bracket bottom plate (145) is connected to the neck structure (200).

6. The head structure (100) according to claim 3, wherein the head frame (110) further comprises:
a frame upper plate (113), wherein the frame upper plate (113) is connected between the first frame side plate (111) and the second frame side plate (112); and
a frame lower plate (114), wherein the frame lower plate (114) is connected between the first frame side plate (111) and the second frame side plate (112).

7. The head structure (100) according to claim 1, further comprising:
a head housing (120), wherein the head housing (120) encloses an exterior of the head frame (110) and is connected to the head frame (110).

8. A humanoid robot, comprising the head structure (100) according to any one of claims 1 to 7, the neck structure (200), and a torso structure (300), wherein an end of the neck structure (200) is connected to a housing (134) of the pitch motor (130) and another end of the neck structure (200) is connected to the torso structure (300).

9. The humanoid robot according to claim 8, further comprising:
a rotary motor (400), wherein a housing (420) of the rotary motor (400) is connected to the torso structure (300), and an output shaft (410) of the rotary motor (400) is connected to the neck structure (200).
